Europäisches Patentamt

(19) European Patent Office

Office européen des brevets

(11) Publication number: **0 136 109 B1**

(12) **EUROPEAN PATENT SPECIFICATION**

(45) Date of publication of patent specification: **17.07.91**  (51) Int. Cl.⁵: **H02G 3/20**

(21) Application number: **84305928.8**

(22) Date of filing: **30.08.84**

(54) **Improvements in and relating to ceiling fixtures for providing electrical connection to light fittings or the like.**

(30) Priority: **30.08.83 GB 8323240**

(43) Date of publication of application:
**03.04.85 Bulletin 85/14**

(45) Publication of the grant of the patent:
**17.07.91 Bulletin 91/29**

(84) Designated Contracting States:
**AT BE CH DE FR GB IT LI LU NL SE**

(56) References cited:
**DE-A- 1 489 399**
**US-A- 2 968 784**
**US-A- 3 706 956**

(73) Proprietor: **Lewden Metal Products Limited**
**Argall Avenue**
**London E10 7QD(GB)**

(72) Inventor: **Lewis, Michael J.**
**12 Pilgrim's Lane**
**London NW3(GB)**
Inventor: **Palmer, Garry W.**
**56 Stocksfield Road**
**London E17(GB)**
Inventor: **Nathan, Norman B.**
**Heather Cottage Penman's Green**
**Chipperfield Hertfordshire(GB)**

(74) Representative: **Bubb, Antony John Allen et al**
**GEE & CO. Chancery House Chancery Lane**
**London WC2A 1QU(GB)**

EP 0 136 109 B1

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid (Art. 99(1) European patent convention).

## Description

This invention concerns an improved ceiling fixture of the kind that is intended to provide electrical connection between the ring main installed in the ceiling and an electric light fitting to be suspended from the ceiling, the ceiling fixture being adapted to provide a readily releasable mechanical and electrical connection between the electric light fitting attached thereto and a base portion of the fixture anchored to the ceiling.

Ceiling fixtures of this type are already known, and comprise a base portion arranged to be anchored to the ceiling, and a removable portion arranged for making engagement with the base portion by way of a horizontally disposed dovetail slide. The base portion comprises electrical contacts against which spring-loaded contact pins arranged in the removable portion can make wiping engagement as the respective portions of the dovetail fitting are moved into alignment. Such a fixture is described in US-A-2 968 784

This known arrangement does have certain disadvantages, however, not the least of which is that the electrical contacts of the base portion become exposed when the connection between the two portions of the fixture is released, and thus there is the danger that the fingers of a person handling the fixture might inadvertently engage a live contact and thus receive an electric shock.

It is an object of the arrangement according to the present invention to eliminate or at least reduce at least some of the disadvantages inherent in the known construction referred to above.

Various features of the invention will become apparent from the following description, and it is to be understood that the invention may extend to any novel and non-obvious combination within the scope of the claims of such features that will be appreciated by one skilled in the art as providing an advantage over the known construction referred to.

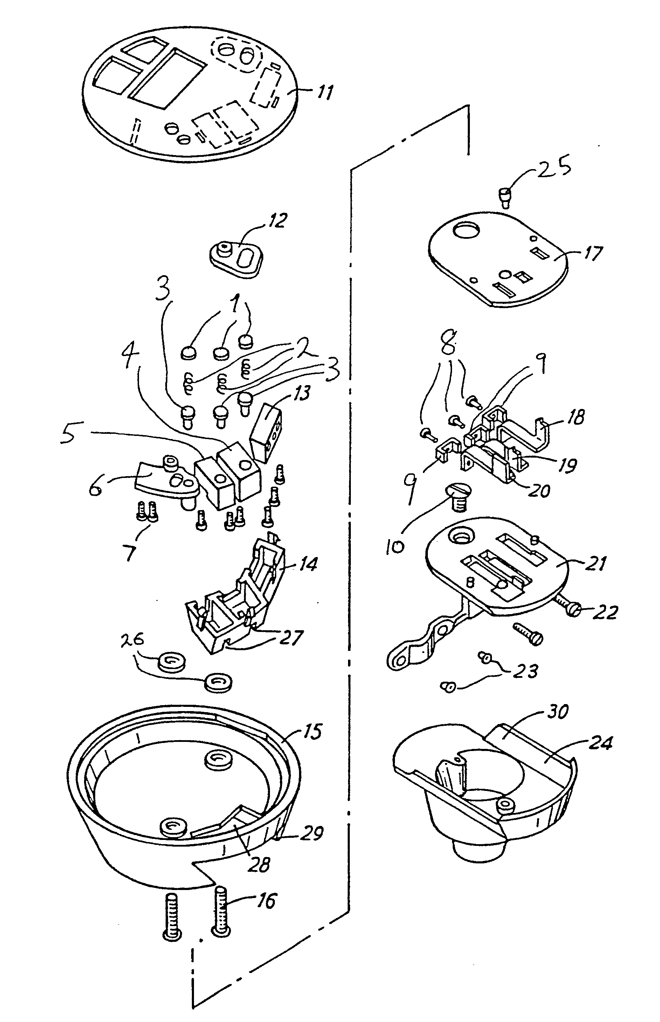

The invention is illustrated by way of example in the accompanying drawing, the single figure of which is an exploded perspective view of a ceiling fixture in accordance with the invention.

Referring to the drawing, a ceiling fixture comprises a base portion formed by an electrically insulating base plate 11 and a metal body portion 15 arranged to be secured together by fastening screws 16 which penetrate corresponding holes in the body portion and base plate and engage within threaded anchorages of a standard ceiling fitting or ceiling joist not shown but arranged in known manner to receive the wires of the ring main.

The screws 16 are held captive within corresponding apertures in the body portion 15 by means of antiloss washers 26 and between the body portion 15 and base plate 11 there is also arranged to be engaged a fixing plate 12 for retaining the electrical wiring, the fixing plate 12 being clamped by a corresponding one of the fixing screws 16 when the fitting is assembled. The other one of the fixing screws 16 is arranged to retain upon the base plate 11 an earth terminal and fixing plate 6 of electrically conductive material, and provided with terminal screws 7. The load of any suspended lighting fitting is thus taken on the fixing screws 16 passing through the fixing plates 6 and 12 and no load is therefore transmitted to any nonmetallic part. A live terminal 5, a neutral terminal 4 and a loop terminal 13, also formed of electrically conductive material, are arranged to be located within corresponding recesses of a snap-on terminal cover 14 formed of insulating non-flammable synthetic plastics material and having barbed tongues arranged to make snap engagement with corresponding slots in the base plate 11, so that the respective terminals are retained captive between the cover 14 and the base plate 11, within respective recesses provided in the terminal cover 14. Each of the terminal blocks 4, 5 and 13, is also provided with terminal screws 7 for the clamping of corresponding connecting wires within the terminal blocks in known manner. The base plate 11, in combination with the cover 14, thus serves to provide complete location and electrical isolation of the respective terminal blocks.

Each of the terminal blocks 4, 5, 6, has a through bore of stepped configuration within which there is held captive a corresponding plunger contact 3 loaded by means of a compression spring 2. The compression springs 2 are retained in engagement with the plunger contacts by means of captive plugs 1 which close off the top end of each bore as viewed in the drawing. The free ends of the plunger contacts 3 extend from the corresponding bores in the terminal blocks 4, 5 and 6 as spring-loaded wiper contacts, and the contacts of terminals 4 and 5 are arranged to register with downwardly and laterally open slots 27 provided in the terminal cover 14. The terminal cover 14 is correspondingly arranged to project through an aperture 28 within the body portion 15, the aperture 28 thus serving to provide access to the slots 27 of the cover 14, as well as to the earth terminal 6 which is also arranged to extend through the aperture 28 adjacent the cover 14.

The body portion 15 is provided with a transversely extending dovetail recess 29, within which a correspondingly dovetailed portion 30 of a metal slide member 24 can make sliding engagement. The slide member 24 is arranged to provide support for the cable of an electric light fitting, and to this end there is provided a cable grip and insulating cover 21 which is arranged to be secured to the slide member 24 by way of securing screw 10 engaging a corresponding threaded aperture of the slide member 24. The other surface of the cover 21 is recessed to receive the wiper contacts, namely an earth wiper contact 20 a live wiper contact 19 and a neutral wiper contact 18. Each of the contacts is provided with a respective terminal screw 8 and wiper contact clamp 9, by means of which the respective ends of the leads of an electrical cable which extend through corresponding apertures in the cover 21 can be clamped to their respective contacts. The contacts are secured in place relatively to the cover member 21 by means of an insulating plate 17 arranged to be secured over the respective contacts and retained in place by means of a slide earthing screw 25 engaging in a corresponding threaded bore of the slide member 24. The insulating plate 17 is located relatively to the cover 21 by means of apertures engaging corresponding pegs of the cover 21, and is further provided with apertures registering with the projecting ends of contacts 18, 19 and 20.

In use, the above described device is assembled with the respective electrical leads connected to the terminals of the ceiling mounting and the slide member, respectively, and the body portion 15 is anchored to the ceiling by means of its fixing screws. A light fitting of which the cable is secured to the slide member 24 can then be simply electrically and mechanically connected to the ceiling anchorage by inserting the dovetail slide member 24 into the corresponding dovetail recess of the body portion 15 anchored to the ceiling. As already mentioned above, all stresses upon the cable of the light fitting are transmitted to the ceiling anchorage via the metal parts 24, 15 and the fixing screws 16.

Before the slide member 24 is inserted into recess 29 of the body portion 15, the terminals 4 and 5 are shrouded by the cover member 14 and the relatively narrow slots 27 in the latter ensure that contact with the live or neutral terminals cannot be made, either accidentally or deliberately, by means of a finger corresponding to a recognised "test finger". As the slide member 24 is inserted into the dovetailed recess 29, the blade-shaped wiper terminals 18 and 19 can enter the corresponding slot 27 making wiping contact with the corresponding spring-loaded plunger contacts 3. Likewise the earth terminal 20 can make wiping engagement with the unshrouded contact of the earth terminal 6, and it will be noted that the earth contacts 20 and 6 are so arranged as to make contact with one another before the contacts 18, 4 or 19, 5, upon insertion of the slide 24 and to break contact last upon removal thereof. As shown in the drawing, the wiper contacts 18 and 19 are provided with cam projections at their leading ends, and as these pass the plunger contact 3, the latter spring back behind the cam projections to provide a positive indication that the slide member 24 has been pushed fully home. The interengagement of the cam projections and the plunger contacts 3 also serve to retain slide member 24 in position against casual displacement until sufficient manual force has been applied to the slide member 24 to move the cam projections in the reverse direction past the plunger contacts.

Thus, it will be seen from the above description that there has been provided in accordance with the invention a novel ceiling fixture with the facility for simple mechanical and electrical interconnection and disconnection of the respective parts without any danger of leaving exposed live terminals when the parts are separated. Further advantages in relation to previously known arrangements of this type will also become apparent to those skilled in the art.

## Claims

1. A ceiling fixture adapted for mounting a suspended electrical fitting whilst providing releasable physical and electrical connections between said fitting on the one hand and the ceiling and electrical power supply on the other hand, said fixture comprising a first body part (15) adapted to be secured to the ceiling and housing electrical terminals (4,5) intended to be electrically connected to said electrical power supply, and a second body part (24) adapted to provide physical support for said electrical fitting and housing wiper contacts (18,19) intended to be electrically connected to said electrical fitting, the said body parts (15,24) being further adapted for releasable sliding interengagement along an axis generally parallel to a surface of said first body part (15) intended for engagement with the ceiling in such a manner that when so interengaged they provide, in use, a load transmitting coupling between said fitting and the ceiling whilst making electrical connections between said terminals (4,5) and said wiper contacts (18,19), characterised in that said electrical terminals (4,5) are housed within an electrically insulating protective shroud member (14) arranged to project together with said terminals (4,5) through an access aperture (28) of said first body part, said shroud member (14) defining for each said terminal (4,5) housed therein an access slot (27) extending in the direction of said axis of interengagement, that said wiper contacts (18,19) correspondingly comprise contact blade portions shaped and dimensioned to penetrate said slots (27) upon interengagement of said first and second body parts (15,24), and that the dimensions of said slots (27) are such as effectively to prevent accidental manual contact with said terminals (4,5) when said body parts (15,24) are disengaged from one another.

2. A ceiling fixture as claimed in Claim 1, characterised in that said terminals (4,5) include spring loaded plunger portions (3) for engagement with said wiper contacts (18,19) and that said blade portions of said wiper contacts (18,19) include cam projections arranged to catch behind said plunger portions (3) when said body parts (15,24) are fully interengaged.

3. A ceiling fixture as claimed in Claim 1 or 2, characterised in that said electrically insulated protective shroud member (14) is arranged to make snap engagement with an electrically insulating base plate (11) arranged to be secured between said first body part (15) and the ceiling, whereby said terminals are retained between said shroud member (14) and said base plate (11).

4. A ceiling fixture as claimed in Claim 3, characterised in that said first body part (15) is formed of electrically conductive material and is adapted to be secured to the ceiling together with said base plate (11) by means of common fastening screws (16) passing therethrough, and that an earth terminal (6) arranged for engagement by a corresponding wiper contact (20) of the second body part is secured between said base plate (11) and the first body part (15) by at least one of said fastening screws and is electrically connected to said first body part (15).

5. A ceiling fixture as claimed in any one of Claims 1-4, characterised in that terminal portions of said wiper contacts (18,19) are housed in said second body part (24) between generally parallel overlapping electrically insulating plate members (17,21) of which one (21) incorporates a cable clamp for an electrical cable intended to connect with said terminal portions and to pass through an exit aperture of said second body part (24) to said electrical fitting, and the other (17) has apertures through which project said blade portions of said wiper contacts.

6. A ceiling fixture as claimed in Claim 5 characterised in that said second body part (24) is formed of electrically conducting material and is electrically connected to an earth wiper terminal (20) housed therein by at least one screw (25) serving to retain said plate members in place within said second body part.

7. A ceiling fixture as claimed in any one of Claims 1 - 6 characterised in that the arrangement is such that an earth terminal (6) and earth wiper contact (20) of said first and second body parts (15,24) respectively are the first to make contact and the last to break contact during engagement and release of the body parts respectively.

**Revendications**

1. Montage de plafond pour monter un appareil électrique suspendu tout en procurant des raccordements physiques et électriques amovibles entre cet appareil d'une part et le plafond et l'alimentation en courant électrique d'autre part, ce montage comportant une première partie de corps (15) adaptée pour être fixée au plafond et dans laquelle sont logées des bornes électriques (4,5) prévues pour être électriquement raccordées à la source de courant électrique, et une deuxième partie de corps (24) adaptée pour supporter physiquement cet appareil électrique et dans laquelle sont logés des contacts frotteurs (18,19) prévus pour être électriquement raccordés à l'appareil électrique, ces parties de corps (15,24) étant en outre adaptées pour coopérer ensemble en coulissant et de façon amovible le long d'un axe sensiblement parallèle à une surface de la première partie de corps (15) prévue pour coopérer avec le plafond de telle manière que, lorsqu'elles coopèrent ainsi ensemble, ces deux parties de corps procurent, en utilisation, un couplage de transmission de charge entre l'appareil et le plafond tout en assurant des raccordements électriques entre les bornes (4,5) et les contacts frotteurs (18,19), caractérisé en ce que ces bornes électriques (4,5) sont logées à l'intérieur d'un capot protecteur électriquement isolant (14) disposé pour se projeter avec lesdites bornes (4,5) à travers une ouverture d'accès (28) de la première partie de corps, ce capot (14) définissant pour chaque borne (4,5) qui y est logée une fente d'accès (27) s'étendant dans la direction de l'axe de la coopération en coulissement des deux parties de corps, en ce que les contacts frotteurs (18,19) comportent en correspondance des portions de lame de contact formées et dimensionnées pour pénétrer dans ces fentes (27) lors de la coopération en coulissement des deux parties de corps (15,24), et en ce que les dimensions des fentes (27) sont telles qu'elles empêchent effectivement tout contact accidentel de la main avec les bornes (4,5) lorsque les deux parties de corps (15,24) sont dégagées l'une de l'autre.

2. Montage de plafond selon la revendication 1, caractérisé en ce que les bornes (4,5) comportent des plongeurs (3) assujettis à des ressorts, prévus pour coopérer avec les contacts frotteurs (18,19) et en ce que les portions de lame des contacts frotteurs (18,19) comportent des saillies de came agencées pour s'encliqueter derrière les plongeurs (3) lorsque les parties de corps (15,24) coopèrent à fond.

3. Montage de plafond selon la revendication 1 ou la revendication 2, caractérisé en ce que le capot protecteur électriquement isolé (14) est agencé pour s'encliqueter dans une plaque de base électriquement isolante (11) adaptée pour être fixée entre la première partie de corps (15) et le plafond, d'où il résulte que les bornes sont retenues entre le capot, (14) et la plaque de base (11).

4. Montage de plafond selon la revendication 3, caractérisé en ce que la première partie de corps (15) est en un matériau conducteur de l'électricité et est adaptée pour être fixée au plafond avec la plaque de base (11) au moyen de vis de fixation communes (16) passant à travers elles, et en ce qu'une borne de terre (6), adaptée pour coopérer avec un contact frotteur correspondant (20) de la deuxième partie de corps, est fixée entre la plaque de base (11) et la première partie de corps (15) par au moins l'une de ces vis de fixation et est électriquement raccordée à la première partie de corps (15).

5. Montage de plafond selon l'une des revendications 1 à 4, caractérisé en ce que les portions de borne des contacts frotteurs (18,19) sont logées dans la deuxième partie de corps (24) entre des plaques isolantes sensiblement parallèles et se recouvrant (17,21), l'une (21) de ces plaques comportant un serre-câble pour un câble électrique prévu pour se raccorder à ces portions de borne et pour passer à travers une ouverture de sortie de la deuxième partie de corps (24) jusqu'à l'appareil électrique et l'autre plaque (17) ayant des ouvertures à travers lesquelles se projettent les portions de lame de ces contacts frotteurs.

6. Montage de plafond selon la revendication 5, caractérisé en ce que la deuxième partie de corps (24) est en un matériau conducteur de l'électricité et est électriquement raccordée à un contact frotteur de terre (20) logé à l'intérieur par au moins une vis (25) servant à retenir en place les plaques à l'intérieur de la deuxième partie de corps.

7. Montage de plafond selon l'une quelconque des revendications 1 à 6, caractérisé en ce que l'agencement est tel qu'une borne de terre (6) et un contact frotteur de terre (20) de la première (15) et la deuxième (24) partie de corps respectivement sont les premiers à entrer en contact lors de la venue en coopération des deux parties de corps et les derniers à se dégager l'un de l'autre lorsque les deux parties de corps se séparent l'une de l'autre.

## Patentansprüche

1. Deckenbefestigung für eine hängende elektrische Fassung unter Schaffung lösbarer mechanischer und elektrischer Verbindungen zwischen der Fassung auf der einen Seite und Decke und der elektrischen Stromversorgung auf der anderen Seite, umfassend ein erstes Bauteil (15) zur Befestigung an der Decke und zur Aufnahme elektrischer Anschlußklemmen (4,5) zum Anschließen an die elektrische Stromversorgung und ein zweites Bauteil (24) zur mechanischen Befestigung der elektrischen Fassung und zur Aufnahme von Gleitkontakten (18, 19), die dazu dienen, eine elektrische Verbindung zur elektrischen Fassung herzustellen, wobei die beiden Bauteile (15, 24) so ausgebildet sind, daß sie lösbar gleitend in Eingriff längs einer im wesentlichen parallel zu einer Anlagefläche zur Decke des ersten Bauteils (15) liegenden Fläche derart gebracht werden können, daß in dieser Eingriffstellung im Gebrauch eine lastübertragende Kupplung zwischen der Fassung und der Decke erzielt ist, während gleichzeitig elektrische Verbindungen zwischen den Anschlußklemmen (4, 5) und den Gleitkontakten (18, 19) bestehen, dadurch gekennzeichnet, daß die elektrischen Anschlußklemmen (4, 5) in einer elektrisch isolierenden Schutzabdeckung (14) untergebracht sind, die so ausgebildet ist, daß sie zusammen mit den elektrischen Anschlußelementen (4, 5) durch eine Zugangsöffnung (28) des ersten Bauteils (15) ragt, wobei die Schutzabdeckung (14) für jede darin untergebrachte Anschlußklemme (4, 5) einen Zugangsschlitz (27) aufweist, der sich in Richtung der genannten Eingriffsachse erstreckt, daß die Gleitkontakte (18, 19) Kontaktzungen aufweisen, die so geformt und dimensioniert sind, daß sie in diese Schlitze (27) eindringen, wenn die beiden Bauteile (15, 24) in Eingriff miteinander verschoben werden und daß die Dimensionen der Schlitze (27) so gewählt sind, daß sie wirksam ungewollte Berührungen von Hand mit den Anschlußklemmen (4, 5) verhindern, wenn die beiden Bauteile (15, 24) voneinander getrennt sind.

2. Deckenbefestigung nach Anspruch 1, dadurch gekennzeichnet, daß die Klemmen (4, 5) federbelastete Plungerabschnitte (3) zum Eingriff in die Gleitkontakte (18, 19) aufweisen und daß die Zungen der Gleitkontakte (18, 19) Nockenvorsprünge aufweisen, die in der Eingriffstellung der beiden Bauteile (15, 24) hinter die Plungerabschnitte (3) rastend eingreifen.

3. Deckenbefestigung nach Anspruch 1 oder 2, dadurch gekennzeichnet, daß die elektrisch isolierende Schutzabdeckung (14) so ausgebildet ist, daß sie durch Raststeckung mit einer elektrisch isolierenden Basisplatte (11) verbindbar ist, die dazu dient, zwischen dem ersten Bauteil (15) und der Decke befestigt zu werden, wobei die genannten Anschlußklemmen zwischen der Schutzabdeckung (14) und der Basisplatte (11) gehaltert sind.

4. Deckenbefestigung nach Anspruch 3, dadurch gekennzeichnet, daß das erste Bauteil (15) aus elektrisch leitfähigem Material besteht und so ausgebildet ist, daß es zusammen mit der Basisplatte (11) durch gemeinsame, die Teile durchsetzende Befestigungsschrauben (16) an der Decke befestigt wird und daß ein Erdungsanschluß (6) vorgesehen ist, der in Kontakt mit einem zugehörigen Gleitkontakt (20) des zweiten Bauteils dient, zwischen der Basisplatte (11) und dem ersten Bauteil (15) durch wenigstens eine der Befestigungsschrauben befestigt und elektrisch mit dem ersten Bauteil (15) verbunden ist.

5. Deckenbefestigung nach einem der Ansprüche 1 bis 4, dadurch gekennzeichnet, daß die Anschlußabschnitte der Gleitkontakte (18, 19) im zweiten Bauteil (24) zwischen im wesentlichen parallelen überlappenden elektrisch isolierenden Platten (17, 21) angeordnet sind, wobei die Platte (21) eine Kabelklemme für ein elektrisches Kabel trägt, welches mit den genannten Anschlußabschnitten verbunden werden und durch eine Austrittsöffnung des zweiten Bauteils (24) zur elektrischen Fassung austreten soll, während die zweite Platte (17) Öffnungen aufweist, durch welche die Zungenabschnitte der Gleitkontakte ragen.

6. Deckenbefestigung nach Anspruch 5, dadurch gekennzeichnet, daß das zweite Bauteil (24) aus elektrisch leitfähigem Material besteht und mit einem Erdungsanschluß im Bauteil mit Hilfe wenigstens einer Schraube (25) elektrisch verbunden ist, die dazu dient, die beiden genannten Platten innerhalb des zweiten Bauteils zu haltern.

7. Deckenbefestigung nach einem der Ansprüche 1 bis 6, dadurch gekennzeichnet, daß die Anordnung so getroffen ist, daß ein Erdanschluß (6) und ein Erdungsgleitkontakt (20) jeweils am ersten und zweiten Bauteil (15, 20) beim Verbinden der Bauteile (15, 24) als erste in Kontakt treten und beim Lösen als letzte den Kontakt aufgeben.